(19) Europäisches Patentamt
European Patent Office
Office européen des brevets

(11) **EP 2 141 203 A1**

(12) **EUROPEAN PATENT APPLICATION**
published in accordance with Art. 153(4) EPC

(43) Date of publication:
**06.01.2010 Bulletin 2010/01**

(51) Int Cl.:
**C08L 83/05** *(2006.01)*    **C08L 83/07** *(2006.01)*
**G02B 1/04** *(2006.01)*

(21) Application number: **08752031.8**

(22) Date of filing: **24.04.2008**

(86) International application number:
**PCT/JP2008/057932**

(87) International publication number:
**WO 2008/136351 (13.11.2008 Gazette 2008/46)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.04.2007 JP 2007116784**

(71) Applicant: **Hitachi Chemical Company, Ltd. Tokyo 163-0449 (JP)**

(72) Inventors:
• **YOSHIDA, Akihiro**
  **Tsukuba-shi**
  **Ibaraki 300-4247 (JP)**
• **TOMIYAMA, Takeo**
  **Tsukuba-shi**
  **Ibaraki 300-4247 (JP)**

• **KOBAYASHI, Shingo**
  **Tsukuba-shi**
  **Ibaraki 300-4247 (JP)**
• **TANAKA, Shouko**
  **Tsukuba-shi**
  **Ibaraki 300-4247 (JP)**
• **SUZUKI, Minoru**
  **Ichihara-shi**
  **Chiba 290-8567 (JP)**
• **SHIINA, Masaru**
  **Ichihara-shi**
  **Chiba 290-8567 (JP)**

(74) Representative: **Jönsson, Hans-Peter**
  **Patentanwälte von Kreisler Selting Werner**
  **Deichmannhaus am Dom**
  **Bahnhofsvorplatz 1**
  **50667 Köln (DE)**

(54) **THERMOSETTING RESIN COMPOSITION AND OPTICAL MEMBER USING CURED PRODUCT OF THE THERMOSETTING RESIN COMPOSITION**

(57)    The thermosetting resin composition of the present invention comprises a compound (A) containing an organic group having two or more carbon atoms and a hydrosilyl group, a compound (B) containing a carbon-carbon double bond, and a hydrosilylation catalyst (C), wherein the composition is liquid at 25°C.

**Fig.1**

EP 2 141 203 A1

## Description

## Technical Field

The present invention relates to a thermosetting resin composition and an optical member using a cured product of the thermosetting resin composition.

## Background Art

Generally, acrylic resins excellent in transparency and light resistance have been heavily used as resins for optical members. On the other hand, epoxy resins have been widely used as resins for optical members used for the light and electronic equipment field because these resins are required to have heat resistance and mechanical properties in an mounting process on electronic substrates and the like and under high temperature operation. However, in recent years, use of a high intensity laser beam, blue colored light, and near-ultraviolet light has been spreading also in the light and electronic equipment field, and a resin having better transparency, heat resistance, and light resistance than before is required.

Generally, epoxy resins have high transparency in the visible region, but have insufficient transparency in the ultraviolet to near-ultraviolet region. Among the epoxy resins, an epoxy resin prepared by using alicyclic bisphenol A diglycidyl ether or the like has relatively high transparency, but a disadvantage thereof is to be easily discolored when exposed to heat or light. As a method of solving the problem of discoloration of such an epoxy resin, for example, Patent Documents 1 and 2 disclose a method of reducing the impurity, which is one of the causes of the discoloration, contained in the alicyclic bisphenol A diglycidyl ether.

Further, since a cured product composed of the above alicyclic epoxy and an acid anhydride has a lower breaking strength and toughness than that prepared by using an aromatic epoxy, interface debonding between the cured product and an adherend in a molded product and occurrence of a crack in the cured product have come to be seen as a problem. Furthermore, another problem is that the acid anhydride volatilizes at the time of curing to reduce the volume.

Although an acrylic resin is excellent in transparency, light discoloration resistance, and heat discoloration resistance, it has insufficient mechanical properties such as breaking strength, and further improvement in these properties is required. Also, another disadvantage thereof is relatively large cure shrinkage, leading to a volume reduction at the time of curing.

On the other hand, since silicone resin has high transparency in the ultraviolet to visible region and is excellent in light discoloration resistance and heat discoloration resistance, the use thereof in an optical member is beginning to be investigated. However, problems thereof are, for example, that a molded product having a complicated shape cannot be obtained and dust and a fingerprint are liable to be attached, because silicone resin is soft. In order to improve these problems, for example, Patent Document 3 discloses a method of substituting a part of methyl groups, which causes the softness, of the dimethylsiloxane skeleton of the silicone resin with phenyl groups. In addition, Patent Document 4 discloses a method of preparing a composite of silicone resin and epoxy resin.

Patent Document 1: Japanese Patent Laid-Open No. 2003-171439
Patent Document 2: Japanese Patent Laid-Open No. 2004-75894
Patent Document 3: Japanese Patent Laid-Open No. 2004-292807
Patent Document 4: Japanese Patent Laid-Open No. 2005-171021

## Disclosure of the Invention

Problems to be Solved by the Invention

However, even the methods described in Patent Documents 3 and 4 pose a problem: the long term reliability of the resulting molded product is not necessarily enough and interface debonding and a crack are liable to be generated with time.

The present invention has been accomplished in view of the above described problems associated with the prior art, and an object of the present invention is to provide a thermosetting resin composition which is excellent in transparency, can sufficiently reduce the cure shrinkage at the time of curing, and can sufficiently suppress the occurrence of a crack in a cured product and the occurrence of interface debonding between the cured product and an adherend over a long period of time, and to provide an optical member using the cured product of the thermosetting resin composition.

Means for Soling the Problems

To achieve the above object, the present invention provides a thermosetting resin composition comprising a compound (A) containing an organic group having two or more carbon atoms and a hydrosilyl group, a compound (B) containing a carbon-carbon double bond, and a hydrosilylation catalyst (C), wherein the composition is liquid at 25°C.

In the thermosetting resin composition of the present invention, the compound (A) containing an organic group having two or more carbon atoms and a hydrosilyl group preferably has a molecular weight of from 300 to 2500.

In the thermosetting resin composition of the present invention, the compound (A) containing an organic group having two or more carbon atoms and a hydrosilyl group preferably has a silicon ratio of 0.45 or less.

In the thermosetting resin composition of the present invention, the compound (A) containing an organic group having two or more carbon atoms and a hydrosilyl group preferably has a mass reduction percentage at 200°C of 10% or less.

In the thermosetting resin composition of the present invention, the number of hydrosilyl groups in one molecule of the compound (A) containing an organic group having two or more carbon atoms and a hydrosilyl group is preferably two or more.

In the thermosetting resin composition of the present invention, the compound (A) containing an organic group having two or more carbon atoms and a hydrosilyl group is preferably liquid at 25°C.

In the thermosetting resin composition of the present invention, the compound (A) containing an organic group having two or more carbon atoms and a hydrosilyl group is preferably a compound obtained by reacting a compound (a1) having a carbon-carbon double bond with a compound (a2) having a hydrosilyl group in the presence of a hydrosilylation catalyst (a3).

Here, the compound (a1) having a carbon-carbon double bond preferably has an aliphatic group and an alicyclic group.

Further, the compound (a1) having a carbon-carbon double bond preferably has one carbon-carbon double bond in one molecule.

In the thermosetting resin composition of the present invention, the number of the carbon-carbon double bonds in one molecule of the compound (B) containing a carbon-carbon double bond is preferably two or more.

In the thermosetting resin composition of the present invention, the compound (B) containing a carbon-carbon double bond preferably has a mass reduction percentage at 200°C of 10% or less.

In the thermosetting resin composition of the present invention, the compound (B) containing a carbon-carbon double bond is preferably liquid at 25°C.

In the thermosetting resin composition of the present invention, the compound (B) containing a carbon-carbon double bond preferably contains at least one group selected from the group consisting of an alicyclic group, an aliphatic group, and a heterocyclic group.

In the thermosetting resin composition of the present invention, the equivalent ratio (hydrosilyl group/carbon-carbon double bond) of the hydrosilyl group in the compound (A) containing an organic group having two or more carbon atoms and a hydrosilyl group to the carbon-carbon double bond in the compound (B) containing a carbon-carbon double bond is preferably from 1/1.4 to 1/0.6.

In the thermosetting resin composition of the present invention, a mixture of the compound (A) containing an organic group having two or more carbon atoms and a hydrosilyl group and the compound (B) containing a carbon-carbon double bond is preferably transparent.

The present invention also provides an optical member comprising a cured product obtained by curing the thermosetting resin composition of the present invention.

**Effect of the Invention**

The present invention can provide a thermosetting resin composition which is excellent in transparency, can sufficiently reduce the cure shrinkage at the time of curing, and can sufficiently suppress the occurrence of a crack in a cured product and the occurrence of interface debonding between the cured product and an adherend over a long period of time, and can provide an optical member using the cured product of the thermosetting resin composition.

**Brief Description of the Drawing**

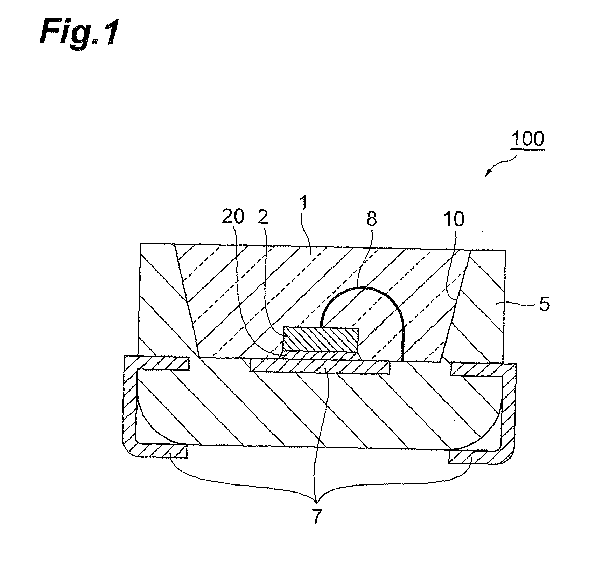

Figure 1 is a schematic end view showing one embodiment of an optical semiconductor device provided with the optical member of the present invention.

Description of Symbols

1: Optical member, 2: Light emitting diode element, 5: Case member, 7: Lead frame, 8: Wire, 10: Cavity, 100: Optical semiconductor device.

**Best Modes for Carrying Out the Invention**

Hereinafter, a suitable embodiment of the present invention will be described in detail with reference to the drawing if necessary. Note that identical symbols are given to the same or corresponding portions in the drawing, and overlapping descriptions are omitted.

The thermosetting resin composition of the present invention comprises a compound (A) containing an organic group having two or more carbon atoms and a hydrosilyl group (hereinafter referred to as a "component (A)" if necessary), a compound (B) containing a carbon-carbon double bond (hereinafter referred to as a "component (B)" if necessary), and a hydrosilylation catalyst (C) (hereinafter referred to as a "component (C)" if necessary), and the composition is liquid at ordinary temperature (25°C).

Conventionally, silicone resin is excellent in transparency but is poor in the compatibility (specifically, adhesion) to various members, and it has a problem in terms of reliability. To solve this problem, in the present invention, an organic group having two or more carbon atoms and a hydrosilyl group are allowed to coexist in one molecule to enhance the compatibility with an organic compound containing a carbon-carbon double bond to obtain an organic-inorganic composite. Generally, the method for preparing a composite of a resin as an organic substance and an inorganic substance containing silicon includes a sol-gel process in the resin and a method of separating a layer of clay in the resin. These methods pose a large problem in terms of precipitation of water with the progress of a reaction, transparency, and the like. On the other hand, it has been found that, when the thermosetting resin composition of the present invention containing the component (A), the component (B), and the component (C) is thermally cured, there is no precipitate accompanying the reaction and a highly transparent cured product is obtained. It has also been found that when the component (A) has an organic group having two or more carbon atoms, the boiling point of the component (A) increases and volatilization of a material at the time of curing can be suppressed. It has also been found that the cured product can have a dense crosslinking structure and the hardness and adhesiveness with an adherend of the cured product can be improved by using a compound containing a carbon-carbon double bond as the component (B). Thus, the thermosetting resin composition of the present invention is excellent in transparency, can sufficiently reduce the cure shrinkage at the time of curing, and can sufficiently suppress the occurrence of a crack in a cured product and the occurrence of interface debonding between the cured product and an adherend over a long period of time.

Hereinafter, each component constituting the thermosetting resin composition of the present invention will be described in detail.

The molecular weight of the compound (A) containing an organic group having two or more carbon atoms and a hydrosilyl group in the present invention is preferably 300 or more from the viewpoint of preventing the volatilization at the time of curing, and is preferably 2500 or less from the viewpoint of ensuring compatibility with the compound (B) containing a carbon-carbon double bond. Further, the molecular weight of the component (A) is more preferably from 400 to 750 from the viewpoint of sufficiently obtaining the above effect. When the molecular weight is more than 750 or less than 400, control of the hardness of the resin tends to become difficult.

The silicon ratio of the compound (A) containing an organic group having two or more carbon atoms and a hydrosilyl group in the present invention is preferably 0.45 or less, more preferably 0.25 or less, and further preferably 0.22 or less, in order to improve the adhesion to various members. Further, the silicon ratio of the component (A) is preferably 0.01 or more, more preferably 0.05 or more, from the viewpoint of compatibility with the component (B). Here, the silicon ratio is defined as the number of silicon atoms in one molecule multiplied by the atomic weight of the silicon atom, divided by the molecular weight. Note that the silicon ratio is specifically calculated by the following formula: Silicon ratio = {atomic weight of silicon atom $\times$ number of silicon atoms in one molecule of component (A)}/molecular weight of component (A)

The mass reduction percentage at 200°C of the compound (A) containing an organic group having two or more carbon atoms and a hydrosilyl group in the present invention is preferably 10% or less, more preferably 5% or less, from the viewpoint of suppressing the loss of weight due to volatilization of the compound at the time of curing.

The number of hydrosilyl groups in one molecule of the compound (A) containing an organic group having two or more carbon atoms and a hydrosilyl group in the present invention is preferably two or more in order to increase the crosslinking density at the time of curing to improve reliability. When the number of hydrosilyl groups is less than two, sufficient crosslinking density will not be obtained, but there is a tendency that a cured product tends to be soft.

Further, the compound (A) containing an organic group having two or more carbon atoms and a hydrosilyl group is preferably a cyclic silicon compound having a structure in which the hydrosilyl groups are combined to form a ring. This enables to more sufficiently reduce the cure shrinkage at the time of curing and more sufficiently suppress the occurrence of a crack in a cured product and the occurrence of interface debonding between the cured product and an adherend over a long period of time.

The compound (A) containing an organic group having two or more carbon atoms and a hydrosilyl group in the present invention is preferably liquid at ordinary temperature (25°C) in view of ease of handling.

The compound (A) containing an organic group having two or more carbon atoms and a hydrosilyl group in the present invention is preferably a compound obtained by reacting a compound (a1) having a carbon-carbon double bond (hereinafter referred to as a "component (a1)" if necessary) with a compound (a2) having a hydrosilyl group (hereinafter referred to as a "component (a2)" if necessary) in the presence of a hydrosilylation catalyst (a3) (hereinafter referred to as a "component (a3)" if necessary).

Here, the compound (a1) having a carbon-carbon double bond is preferably a compound having an aliphatic group and/or an alicyclic group, more preferably a compound having at least an alicyclic group, in terms of polymerization curability, transparency, and a hue. When a compound having an alicyclic group is used as the component (a1), a cured product finally obtained tends to have high transparency, low water absorption, low moisture permeability, high heat resistance, and small cure shrinkage.

The compound (a1) having a carbon-carbon double bond in the present invention preferably has one carbon-carbon double bond in one molecule. When the component (a1) has two or more carbon-carbon double bonds in one molecule, the component (A) which is a reaction product of the component (a1) and the component (a2) will be a three-dimensional crosslinked body, and a mixture thereof with the component (B) tends not to be liquid but to be gel.

Examples of the compound (a1) having a carbon-carbon double bond in the present invention include (meth) acrylate esters such as cyclopentyl (meth)acrylate, cyclohexyl (meth)acrylate, methylcyclohexyl (meth)acrylate, trimethylcyclohexyl (meth)acrylate, norbornyl (meth)acrylate, norbornylmethyl (meth)acrylate, phenylnorbornyl (meth)acrylate, cyanonorbornyl (meth)acrylate, isobornyl (meth)acrylate, bornyl (meth)acrylate, menthyl (meth)acrylate, fenchyl (meth) acrylate, adamanthyl (meth)acrylate, dimethyladamanthyl (meth)acrylate, tricyclo[5.2.1.0$^{2,6}$]deca-8-yl methacrylate, cyclodecyl (meth)acrylate, methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, pentyl (meth)acrylate, n-hexyl (meth)acrylate, 2-ethylhexyl (meth)acrylate, n-octyl (meth)acrylate, dodecyl (meth)acrylate, lauryl (meth)acrylate, octadecyl (meth)acrylate, butoxyethyl (meth)acrylate, phenyl (meth)acrylate, benzyl (meth)acrylate, naphthyl (meth)acrylate, glycidyl (meth)acrylate, 2-hydroxyethyl (meth)acrylate, nonylphenoxypolyethyleneglycol (meth)acrylate, pentamethylpiperidyl (meth)acrylate, tetramethylpiperidyl (meth)acrylate, methoxypolyethyleneglycol (meth)acrylate, N,N-dimethylaminoethyl (meth) acrylate, (meth)acryloyl morpholine, acrylamide, methacrylamide, N,N-dimethyl (meth)acrylamide, N,N-diethyl (meth) acrylamide, N,N-dimethylaminopropyl (meth)acrylamide, N-isopropyl (meth)acrylamide, N-hydroxyethyl (meth)acrylamide, and (3-(meth)acryloxypropyl) tris(trimethylsiloxy)silane; vinylenes such as 4-vinylpyridine, 2-vinylpyridine, α-methylstyrene, α-ethylstyrene, α-fluorostyrene, α-chlorostyrene, α-bromostyrene, fluorostyrene, chlorostyrene, bromostyrene, methylstyrene, methoxystyrene, and styrene; maleimides such as N-methylmaleimide, N-ethylmaleimide, N-propylmaleimide, N-i-propylmaleimide, N-butylmaleimide, N-i-butylmaleimide, N-t-butylmaleimide, N-laurylmaleimide, N-cyclohexylmaleimide, N-benzylmaleimide, N-phenylmaleimide, N-(2-chlorophenyl)maleimide, N-(4-chlorophenyl)maleimide, N-(4-bromophenyl)phenylmaleimide, N-(2-methylphenyl)maleimide, N-(2-ethylphenyl)maleimide, N-(2-methoxypheny)maleimide, N-(2,4,6-trimethylphenyl)maleimide, N-(4-benzylphenyl)maleimide, and N-(2,4,6-tribromophenyl) maleimide; vinyl ethers such as dicyclopentenyl vinyl ether, cyclohexyl vinyl ether, 1-ethyl-vinyloxy cyclohexanol, tricyclodecyl vinyl ether, a positional isomer of tricyclodecyl vinyl ether, tricyclodecane monomethanol vinyl ether, 9-vinyloxy dicyclopentanol, vinyl monochloroacetate, vinyl pivalate, vinyl benzoate, vinyl butyrate, vinyl caproate, vinyl laurate, vinyl stearate, N-vinylacetamide, vinylcaprolactone, vinylcyclohexane, 4-vinyl-1,3-dioxolane-2-one, vinylene carbonate, vinyl 2-ethylhexanoate, vinyl neodecanoate, vinyl neononanoate, 5-vinyl-2-norbornene, 4-(vinyloxy)butyl stearate, and vinyl propionate; and natural product materials such as β-pinene and α-pinene. These can be used independently or in combination of two or more. Among these, tricyclo[5.2.1.0$^{2,6}$]deca-8-yl methacrylate, tricyclodecyl vinyl ether, and a positional isomer of tricyclodecyl vinyl ether are preferred from the viewpoint of transparency, low water absorption, low moisture permeability, high heat resistance, and low shrinkage of a cured product.

Examples of the compound (a2) having a hydrosilyl group in the present invention include 1,1,3,3-tetramethyldisiloxane, 1,3-bis(dichloromethyl)-1,1,3,3-tetramethyldisiloxane, 1,1,3,3,5,5-hexamethyltrisiloxane, 1,3,5,7-tetramethylcyclotetrasiloxane, 1,3,5,7,9-pentamethylcyclopentasiloxane, cyclotrisiloxane, a methylhydrosiloxane oligomer, and a hydrosiloxane oligomer. From the viewpoint of compatibility and reactivity with the component (a1), 1,3,5,7-tetramethylcyclotetrasiloxane and 1,3,5,7,9-pentamethylcyclopentasiloxane are particularly preferred.

The number of carbon-carbon double bonds in one molecule of the compound (B) containing a carbon-carbon double bond in the present invention is preferably two or more in order to form a high-density three-dimensional crosslinking structure after curing to improve reliability. When the number of carbon-carbon double bonds in one molecule is less than two, the cured product tends to be soft.

The mass reduction percentage at 200°C of the compound (B) containing a carbon-carbon double bond in the present invention is preferably 10% or less, more preferably 5% or less, in order to suppress the loss of weight due to volatilization of the compound at the time of curing.

The compound (B) containing a carbon-carbon double bond in the present invention is preferably liquid at ordinary temperature (25°C) in view of ease of handling.

Further, the compound (B) containing a carbon-carbon double bond in the present invention preferably contains at least one group selected from the group consisting of an alicyclic group, an aliphatic group, and a heterocyclic group in terms of compatibility and hardness.

Examples of the compound (B) containing a carbon-carbon double bond in the present invention include polyfunctional (meth)acrylates such as dicyclopentenyl (meth)acrylate, dicyclopentenyl oxyethyl (meth)acrylate, vinyl (meth)acrylate, dicyclopentadiene dimethanol di(meth)acrylate, polyethylene glycol di(meth)acrylate, 1,4-butanediol di(meth)acrylate, neopentyl glycol di(meth)acrylate, 1,6-hexanediol di(meth)acrylate, 1,9-nonanediol di(meth)acrylate, 1,10-decanediol di(meth)acrylate, glycerol di(meth)acrylate, 2-hydroxy-3-acryloyloxypropyl (meth)acrylate, EO adduct di(meth)acrylate of bisphenol A, and trimethylolpropane tri(meth)acrylate; arylates such as triallyl isocyanurate; vinyl ethers such as cyclohexane dimethanol divinyl ether, cyclohexane dimethanol divinyl ether, dicyclopentenyl vinyl ether, dicyclopentadiene dimethanol divinyl ether, dicyclopentadiene diol divinyl ether, didecanol vinyl ether, tricyclodecyl vinyl ether, cyclohexyl vinyl ether, pentacyclopentadecane dimethanol divinyl ether, pentacyclopentadecane diol divinyl ether, tricyclodecane dimethanol divinyl ether, tricyclodecane diol divinyl ether, and hydrogenated bisphenol A divinyl ether; vinyl compounds such as divinyl adipate, vinyl crotonate, and dimethylsiloxane divinyl; and compounds having a double bond such as limonene, 1,5-hexadiene, 1,8-nonadiene, butadiene, and polybutadiene. These can be used in combination. Among these, from the viewpoint of the hue of a cured product and the like, particularly preferred are triallyl isocyanurate, tricyclodecyl vinyl ether, pentacyclopentadecane dimethanol divinyl ether, tricyclodecane dimethanol divinyl ether, hydrogenated bisphenol A divinyl ether, dicyclopentadiene dimethanol diacrylate di(meth)acrylate, and polybutadiene.

In the present invention, the equivalent ratio (hydrosilyl group/carbon-carbon double bond) of the hydrosilyl group in the compound (A) containing an organic group having two or more carbon atoms and a hydrosilyl group to the carbon-carbon double bond in the compound (B) containing a carbon-carbon double bond is preferably from 1/1.4 to 1/0.6, more preferably from 1/1.3 to 1/0.7. When the equivalent ratio is less than 1/1.4, the carbon-carbon double bond in the component (B) will be present excessively and the cured product tends to be discolored to reduce the transparency. When the equivalent ratio exceeds 1/0.6, the hardness of the resulting cured product tends to be reduced.

In the thermosetting resin composition of the present invention, it is preferred that the content of the components (A) and (B) is suitably controlled so that the conditions of the above equivalent ratio (hydrosilyl group/carbon-carbon double bond) may be satisfied. Generally, the content of the component (A) is preferably set in the range of from 60 to 90% by mass, more preferably from 70 to 90% by mass on the basis of the total amount of the components (A) and (B).

Further, in the present invention, a mixture of the compound (A) containing an organic group having two or more carbon atoms and a hydrosilyl group and the compound (B) containing a carbon-carbon double bond is preferably transparent to visible light. When the mixture obtained by mixing these components (A) and (B) is opaque, the resulting cured product tends to be cloudy.

In the present invention, a well-known reaction catalyst can be used for the hydrosilylation catalyst used as the component (C) and the component (a3). Specific examples thereof include platinum group metal elements such as platinum (including platinum black), rhodium, and palladium; platinum chloride, chloroplatinic acid, and chloroplatinate; platinum group metals such as platinum black and palladium each carried by a carrier such as alumina, silica, or carbon; and a complex of platinum chloride, chloroplatinic acid, or chloroplatinate and a vinyl group-containing siloxane, particularly a vinyl group-containing cyclosiloxane.

In the present invention, it is preferred to use a well-known catalyst such as a platinum-based catalyst, a rhodium-based catalyst, a palladium-based catalyst for the hydrosilylation catalyst used as the component (C) and the component (a3). Specific examples thereof include a platinum impalpable powder, platinum black, a platinum-carrying silica impalpable powder, a platinum-carrying activated carbon, chloroplatinic acid, platinum tetrachloride, a complex of chloroplatinic acid and olefin, a solution of chloroplatinic acid in alcohol, a complex of chloroplatinic acid and an alkenyl siloxane such as divinyltetramethyldisiloxane, a platinum-olefin complex, a platinum-alkenylsiloxane complex, tetrakis(triphenylphosphine)palladium, a rhodium compound, and a resin powder in which any of these platinum-group catalysts is dispersed or encapsulated in a thermoplastic resin such as an acrylic resin, a polycarbonate resin, a silicone resin, or a polyamide resin. Among these, a platinum-containing catalyst is preferred in terms of little discoloration. Particularly preferred platinum-containing catalysts include chloroplatinic acid, platinum tetrachloride, a complex of chloroplatinic acid and olefin, a solution of chloroplatinic acid in alcohol, a complex of chloroplatinic acid and an alkenyl siloxane such as divinyltetramethyldisiloxane, a platinum-olefin complex, and a platinum-alkenylsiloxane complex.

In the thermosetting resin composition of the present invention, the content of the component (C) is suitably controlled by the type of the component (A), the component (B), and the component (C), and the like. Generally, the content of the component (C) is preferably in the range of from 0.00001 to 0.5 part by mass, more preferably from 0.00001 to 0.3 part by mass, relative to 100 parts by mass of the total amount of the component (A) and the component (B).

Further, in addition to the above components, a hindered amine-based light stabilizer, a phenol-based or phosphorus-based antioxidant, an ultraviolet absorber, an inorganic filler, an organic filler, a coupling agent, a polymerization modifier such as ethynylcyclohexanol, and the like can be added to the thermosetting resin composition of the present invention. Furthermore, a release agent, a plasticizer, an antistatic agent, a flame retardant, and the like may be added from the viewpoint of moldability.

Next, the optical member of the present invention will be described. The optical member of the present invention is composed of a cured product obtained by curing the thermosetting resin composition of the present invention as described above.

Since the optical member of the present invention is formed using the thermosetting resin composition of the present invention as described above, it has a sufficiently high optical transparency, and the occurrence of a crack and the occurrence of interface debonding between the member and an adherend can be sufficiently suppressed over a long period of time. Examples of the optical member of the present invention include an optical member for optical semiconductor device applications such as a transparent substrate, a lens, adhesives, an optical waveguide, a light emitting diode (LED), a phototransistor, a photodiode, and a solid state image pickup device.

As a method for producing the optical member using the thermosetting resin composition of the present invention, a method of casting or potting the thermosetting resin composition into a desired portion or pouring it into a mold and then curing it by heating can be mentioned.

As desired curing conditions, the temperature and time are selected so that a final residual monomer may be 5% by mass or less. These curing conditions depend on types and combinations of the compound (A) containing an organic group having two or more carbon atoms and a hydrosilyl group, the compound (B) containing a carbon-carbon double bond, and the hydrosilylation catalyst (C), and the amount of additives. The curing conditions are desirably about 1 to 10 hours at 60 to 150°C. Further, in order to reduce the internal stress generated by a rapid cure reaction, it is desirable to increase the curing temperature stepwise.

Furthermore, in the present invention, when the component (a1) is allowed to react with the component (a2) in the presence of the component (a3) in order to obtain the component (A), the reaction may be performed by diluting the components with an organic solvent in order to suppress the abnormal heat generation by a rapid reaction.

Figure 1 is a schematic end view showing one embodiment of an optical semiconductor device provided with the optical member of the present invention. An optical semiconductor device 100 shown in Figure 1 is a surface mounting type light emitting diode comprising a light emitting diode element 2 and a transparent optical member 1 provided so that the light emitting diode element 2 may be sealed. The light emitting diode element 2 is arranged at the bottom of a cavity 10 formed in a case member 5. The light emitting diode element 2 is adhered to the case member 5 via an adhesive layer 20 and is connected with a lead frame 7 via a wire 8.

The optical member 1 covers the light emitting diode element 2 and fills the cavity 10. The optical member 1 is formed, for example, by a method of pouring the thermosetting resin composition of the present invention as described above into the cavity 10 and curing the thermosetting resin composition in the cavity 10 by heating.

The thermosetting resin composition of the present invention as described above provides a cured product thereof having sufficiently high optical transparency, can sufficiently reduce the cure shrinkage at the time of curing, and can sufficiently suppress the occurrence of a crack in the cured product and the occurrence of interface debonding between the cured product and an adherend over a long period of time. Further, the cured product thereof is suitable as an optical member for optical semiconductor device applications such as a transparent substrate, a lens, adhesives, an optical waveguide, a light emitting diode (LED), a phototransistor, a photodiode, and a solid state image pickup device.

**Examples**

Hereinafter, the present invention will be described more specifically with reference to Examples, but the present invention is not limited to these.

(Example 1)

Into a 100 ml screw pipe were charged 6.47 parts by mass of tricyclo[5.2.1.0$^{2,6}$]deca-8-yl methacrylate (manufactured by Hitachi Chemical Co., Ltd., hereinafter referred to as "TCDMA"), 3.53 parts by mass of 1,3,5,7-tetramethylcyclotetrasiloxane (manufactured by Wako Pure Chemical Industries, Ltd., hereinafter referred to as "TMCTS"), and 0.015 part by mass of ethynylcyclohexanol (manufactured by Wako Pure Chemical Industries, Ltd.), followed by mixing these components to obtain a uniform mixture. Subsequently, 0.020 part by mass of a platinum (0)-2,4,6,8-tetramethyl-2,4,6,8-tetravinylcyclotetrasiloxane complex (manufactured by Wako Pure Chemical Industries, Ltd., Pt content: 1.7% by mass) was added to the mixture to obtain a solution. The solution was heated in an oven for 1 hour at 100°C, 2 hours at 125°C, and 1 hour at 150°C to obtain a cyclic silicon compound having an organic group having two or more carbon atoms and a hydrosilyl group. The resulting cyclic silicon compound was liquid in ordinary temperature (25°C).

Next, 2.45 parts by mass of triallyl isocyanurate (manufactured by Nippon Kasei Chemical Co., Ltd., hereinafter referred to as "TAIC") and 0.015 part by mass of ethynylcyclohexanol (Wako Pure Chemical Industries, Ltd.) were charged into the 100 ml screw pipe containing the cyclic silicon compound as described above, followed by mixing these components to obtain a uniform mixture. Subsequently, 0.020 part by mass of a platinum (0)-2,4,6,8-tetramethyl-2,4,6,8-tetravinylcyclotetrasiloxane complex (manufactured by Wako Pure Chemical Industries, Ltd., Pt content: 1.7% by mass) was added to the mixture to obtain a solution of a thermosetting resin composition.

The solution of the thermosetting resin composition was cast into the cavity part of a polyphthalamide surface mounting type LED having an outside dimension of 3.2 mm × 2.6 mm × 1.8 mm and a cavity inside diameter of $\phi$ 2.4 mm and thermally cured for 1 hour at 100°C, 2 hours at 125°C, and 1 hour at 150°C to prepare a surface mounting type LED package. In addition, 7 g of the solution of the thermosetting resin composition were poured into an aluminum cup and heated in an oven for 1 hour at 100°C, 2 hours at 125°C, and 1 hour at 150°C to obtain cured products for measuring physical properties each having a thickness of 3 mm and 1 mm.

(Example 2)

A surface mounting type package and a cured product for measuring physical properties were obtained in the same manner as in Example 1 except that 6.47 parts by mass of "TCDMA" in Example 1 were replaced with 5.97 parts by mass of tricyclodecyl vinyl ether (hereinafter referred to as "TCD-VE"); the loading of "TMCTS" was changed to 4.03 parts by mass; and the loading of "TAIC" was changed to 2.80 parts by mass, respectively.

(Example 3)

A surface mounting type package and a cured product for measuring physical properties were obtained in the same manner as in Example 1 except that 6.47 parts by mass of "TCDMA" in Example 1 were replaced with 5.534 parts by mass of a positional isomer of tricyclodecyl vinyl ether (hereinafter referred to as "TMM-VE"); the loading of "TMCTS" was changed to 3.466 parts by mass; and the loading of "TAIC" was changed to 2.395 parts by mass, respectively.

(Example 4)

A surface mounting type package and a cured product for measuring physical properties were obtained in the same manner as in Example 1 except that 6.47 parts by mass of "TCDMA" in Example 1 were replaced with 4.605 parts by mass of cyclohexyl vinyl ether (hereinafter referred to as "CHVE"); the loading of "TMCTS" was changed to 4.395 parts by mass; and 2.45 parts by mass of "TAIC" were replaced with 5.738 parts by mass of pentacyclopentadecane dimethanol divinyl ether (hereinafter referred to as "PDM-DVE").

(Example 5)

A surface mounting type package and a cured product for measuring physical properties were obtained in the same manner as in Example 1 except that the loading of "TCDMA" in Example 1 was changed to 4.303 parts by mass; the loading of "TMCTS" was changed to 4.697 parts by mass; and the loading of "TAIC" was changed to 4.868 parts by mass, respectively.

(Example 6)

A surface mounting type package and a cured product for measuring physical properties were obtained in the same manner as in Example 1 except that the loading of "TCDMA" in Example 1 was changed to 4.948 parts by mass; the loading of "TMCTS" was changed to 4.052 parts by mass; and the loading of "TAIC" was changed to 3.733 parts by mass, respectively.

(Example 7)

A surface mounting type package and a cured product for measuring physical properties were obtained in the same manner as in Example 1 except that 6.47 parts by mass of "TCDMA" in Example 1 were replaced with 5.274 parts by mass of n-hexyl methacrylate (manufactured by Kyoeisha Chemical Co., Ltd., hereinafter referred to as "nHMA"); the loading of "TMCTS" was changed to 3.726 parts by mass; and the loading of "TAIC" was changed to 2.574 parts by mass, respectively.

(Example 8)

A surface mounting type package and a cured product for measuring physical properties were obtained in the same manner as in Example 1 except that 6.47 parts by mass of "TCDMA" in Example 1 were replaced with 7.008 parts by mass of 3-methacryloxypropyl tris(trimethylsiloxy)silane (manufactured by Chisso Corporation, hereinafter referred to as "TRIS"); the loading of "TMCTS" was changed to 1.992 parts by mass; and the loading of "TAIC" was changed to 1.377 parts by mass, respectively.

(Example 9)

A surface mounting type package and a cured product for measuring physical properties were obtained in the same manner as in Example 1 except that 6.47 parts by mass of "TCDMA" in Example 1 were replaced with 6.147 parts by mass of cyclohexyl methacrylate (manufactured by Kyoeisha Chemical Co., Ltd., hereinafter referred to as "CHMA"); the loading of "TMCTS" was changed to 4.395 parts by mass; and the loading of "TAIC" was changed to 3.036 parts by mass, respectively.

(Example 10)

A surface mounting type package and a cured product for measuring physical properties were obtained in the same manner as in Example 1 except that the loading of "TCDMA" in Example 1 was changed to 5.822 parts by mass, and the loading of "TMCTS" was changed to 3.178 parts by mass, respectively; and 2.45 parts by mass of "TAIC" were replaced with 4.149 parts by mass of "PDM-DVE".

(Example 11)

A surface mounting type package and a cured product for measuring physical properties were obtained in the same manner as in Example 1 except that the loading of "TCDMA" in Example 1 was changed to 5.822 parts by mass, and the loading of "TACTS" was changed to 3.178 parts by mass, respectively; and 2.45 parts by mass of "TAIC" were replaced with 3.858 parts by mass of hydrogenated bisphenol A divinyl ether (hereinafter referred to as "HBA-DVE").

(Example 12)

A surface mounting type package and a cured product for measuring physical properties were obtained in the same manner as in Example 1 except that 6.47 parts by mass of "TCDMA" in Example 1 were replaced with 4.774 parts by mass of "TCD-VE"; the loading of "TMCTS" was changed to 3.226 parts by mass; and 2.45 parts by mass of "TAIC" were replaced with 2.95 parts by mass of tricyclodecane dimethanol divinyl ether (hereinafter referred to as "TDM-DVE").

(Example 13)

A surface mounting type package and a cured product for measuring physical properties were obtained in the same manner as in Example 1 except that 6.47 parts by mass of "TCDMA" in Example 1 were replaced with 5.97 parts by mass of "TCD-VE"; the loading of "TMCTS" was changed to 4.03 parts by mass; and 2.45 parts by mass of "TAIC" were replaced with 5.10 parts by mass of dicyclopentadiene dimethanol diacrylate (manufactured by Shin-Nakamura Chemical Co., Ltd., hereinafter referred to as "A-DCP").

(Example 14)

A surface mounting type package and a cured product for measuring physical properties were obtained in the same manner as in Example 1 except that 6.47 parts by mass of "TCDMA" in Example 1 were replaced with 5.97 parts by mass of "TCD-VE"; the loading of "TMCTS" was changed to 4.03 parts by mass; and 2.45 parts by mass of "TAIC" were replaced with 1.81 parts by mass of polybutadiene (manufactured by Aldrich, hereinafter referred to as "PB").

(Example 15)

A surface mounting type package and a cured product for measuring physical properties were obtained in the same manner as in Example 1 except that the loading of "TCDMA" in Example 1 was changed to 6.87 parts by mass; 3.53 parts by mass of "TMCTS" were replaced with 3.13 parts by mass of 1,3,5,7,9-pentamethylcyclopentasiloxane (manufactured by Aldrich, hereinafter referred to as "PMCPS"); and the loading of "TAIC" was changed to 1.74 parts by mass.

(Example 16)

A surface mounting type package and a cured product for measuring physical properties were obtained in the same manner as in Example 1 except that 2.45 parts by mass of "TAIC" in Example 1 were replaced with 3.96 parts by mass of 1,9-nonanediol dimethacrylate (manufactured by Kyoeisha Chemical Co., Ltd., hereinafter referred to as "1,9-NDA").

(Example 17)

A surface mounting type package and a cured product for measuring physical properties were obtained in the same manner as in Example 1 except that the loading of "TCDMA" in Example 1 was changed to 5.822 parts by mass; the loading of "TMCTS" was changed to 3.178 parts by mass; and the loading of "TAIC" was changed to 2.635 parts by mass, respectively.

(Example 18)

A surface mounting type package and a cured product for measuring physical properties were obtained in the same manner as in Example 1 except that the loading of "TCDMA" in Example 1 was changed to 5.822 parts by mass; the loading of "TMCTS" was changed to 3.178 parts by mass; and the loading of "TAIC" was changed to 3.074 parts by mass, respectively.

(Example 19)

A surface mounting type package and a cured product for measuring physical properties were obtained in the same manner as in Example 1 except that the loading of "TCDMA" in Example 1 was changed to 5.822 parts by mass; the loading of "TMCTS" was changed to 3.178 parts by mass; and the loading of "TAIC" was changed to 1.757 parts by mass, respectively.

(Example 20)

A surface mounting type package and a cured product for measuring physical properties were obtained in the same manner as in Example 1 except that the loading of "TCDMA" in Example 1 was changed to 5.822 parts by mass; the loading of "TMCTS" was changed to 3.178 parts by mass; and the loading of "TAIC" was changed to 1.317 parts by mass, respectively.

(Example 21)

A surface mounting type package and a cured product for measuring physical properties were obtained in the same manner as in Example 1 except that 2.45 parts by mass of "TAIC" in Example 1 were replaced with 1.59 parts by mass of "PB".

(Comparative Example 1)

Into a 100 ml screw pipe were charged 3.53 parts by mass of "TMCTS" and 6.47 parts by mass of "TDM-DVE" followed by mixing these components to obtain a uniform mixture. Subsequently, 0.020 part by mass of a platinum (0)-2,4,6,8-tetramethyl-2,4,6,8-tetravinylcyclotetrasiloxane complex (manufactured by Wako Pure Chemical Industries, Ltd., Pt content: 1.7% by mass) was added to the mixture to obtain a solution of a thermosetting resin composition.

The solution of the thermosetting resin composition was cast into the cavity part of a polyphthalamide surface mounting type LED having an outside dimension of 3.2 mm × 2.6 mm × 1.8 mm and a cavity inside diameter of φ 2.4 mm and thermally cured for 1 hour at 100°C, 2 hours at 125°C, and 1 hour at 150°C to prepare a surface mounting type LED package. In addition, 7 g of the solution of the thermosetting resin composition were poured into an aluminum cup and heated in an oven for 1 hour at 100°C, 2 hours at 125°C, and 1 hour at 150°C to obtain cured products for measuring physical properties each having a thickness of 3 mm and 1 mm.

(Comparative Example 2)

A surface mounting type package and a cured product for measuring physical properties were obtained in the same manner as in Comparative Example 1 except that the loading of "TMCTS" in Comparative Example 1 was changed to 5.80 parts by mass; and 6.47 parts by mass of "TDM-DVE" were replaced with 4.20 parts by mass of "TAIC".

(Comparative Example 3)

A surface mounting type package and a cured product for measuring physical properties were obtained in the same manner as in Comparative Example 1 except that the loading of "TMCTS" in Comparative Example 1 was changed to 5.24 parts by mass; and 6.47 parts by mass of "TDM-DVE" were replaced with 4.76 parts by mass of "PB".

(Comparative Example 4)

A surface mounting type package and a cured product for measuring physical properties were obtained in the same manner as in Comparative Example 1 except that 3.53 parts by mass of "TMCTS" in Comparative Example 1 were replaced with 5.60 parts by mass of polymethylhydrosilicone (manufactured by Aldrich, hereinafter referred to as "PHS"); and the loading of "TDM-DVE" was changed to 4.40 parts by mass.

(Comparative example 5)

A surface mounting type package and a cured product for measuring physical properties were obtained in the same manner as in Comparative Example 1 except that 3.53 parts by mass of "TMCTS" in Comparative Example 1 were replaced with 4.71 parts by mass of "PHS"; and 6.47 parts by mass of "TDM-DVE" were replaced with 5.29 parts by mass of "PDM-DVE".

(Comparative Example 6)

A surface mounting type package and a cured product for measuring physical properties were obtained in the same manner as in Comparative Example 1 except that 3.53 parts by mass of "TMCTS" in Comparative Example 1 were replaced with 1.24 parts by mass of "PHS"; and 6.47 parts by mass of "TDM-DVE" were replaced with 8.76 parts by mass of "TAIC".

The following Tables 1 to 4 collectively show the loading of each component and the equivalent ratio (hydrosilyl group/carbon-carbon double bond) of the hydrosilyl group in the component (A) to the carbon-carbon double bond in the component (B) in the thermosetting resin compositions in the above Examples and Comparative Examples.

EP 2 141 203 A1

[Table 1]

| | | Examples | | | | | | |
|---|---|---|---|---|---|---|---|---|
| | | 1 | 2 | 3 | 4 | 5 | 6 | 7 |
| Component (A) | Component (a1) | TCDMA | TCD-VE | TMM-VE | CHVE | TCDMA | TCDMA | nHMA |
| | Loading (parts by mass) | 6.47 | 5.97 | 5.534 | 4.605 | 4.303 | 4.948 | 5.274 |
| | Component (a2) | TMCTS | TMCTS | TMCTS | TMCTS | TMCTS | TMCTS | TMCTS |
| | Loading (parts by mass) | 3.53 | 4.03 | 3.466 | 4.395 | 4.697 | 4.052 | 3.726 |
| Component (B) | | TAIC | TAIC | TAIC | PDM-DVE | TAIC | TAIC | TAIC |
| Loading (parts by mass) | | 2.45 | 2.80 | 2.395 | 5.738 | 4.868 | 3.733 | 2.574 |
| Equivalent ratio (hydrosilyl group/carbon-carbon double bond) | | 1/1 | 1/1 | 1/1 | 1/1 | 1/1 | 1/1 | 1/1 |

[Table 2]

| | | Examples | | | | | | |
|---|---|---|---|---|---|---|---|---|
| | | 8 | 9 | 10 | 11 | 12 | 13 | 14 |
| Component (A) | Component (a1) | TRIS | CHMA | TCDMA | TCDMA | TCD-VE | TCD-VE | TCD-VE |
| | Loading (parts by mass) | 7.008 | 6.147 | 5.822 | 5.822 | 4.774 | 5.97 | 5.97 |
| | Component (a2) | TMCTS | TMCTS | TMCTS | TMCTS | TMCTS | TMCTS | TMCTS |
| | Loading (parts by mass) | 1.992 | 4.395 | 3.178 | 3.178 | 3.226 | 4.03 | 4.03 |
| Component (B) | | TAIC | TAIC | PDM-DVE | HBA-DVE | TDM-DVE | A-DCP | PB |
| Loading (parts by mass) | | 1.377 | 3.036 | 4.149 | 3.858 | 2.95 | 5.10 | 1.81 |
| Equivalent ratio (hydrosilyl group/carbon-carbon double bond) | | 1/1 | 1/1 | 1/1 | 1/1 | 1/1 | 1/1 | 1/1 |

[Table 3]

| | | Examples | | | | | | |
|---|---|---|---|---|---|---|---|---|
| | | 15 | 16 | 17 | 18 | 19 | 20 | 21 |
| Component (A) | Component (a1) | TCDMA | TCDMA | TCDMA | TCDMA | TCDMA | TCDMA | TCDMA |
| | Loading (parts by mass) | 6.87 | 6.47 | 5.822 | 5.822 | 5.822 | 5.822 | 6.47 |
| | Component (a2) | PMCPS | TMCTS | TMCTS | TMCTS | TMCTS | TMCTS | TMCTS |
| | Loading (parts by mass) | 3.13 | 3.53 | 3.178 | 3.178 | 3.178 | 3.178 | 3.53 |
| Component (B) | | TAIC | 1,9-NDA | TAIC | TAIC | TAIC | TAIC | PB |
| Loading (parts by mass) | | 1.74 | 3.96 | 2.635 | 3.074 | 1.757 | 1.317 | 1.59 |
| Equivalent ratio (hydrosilyl group/carbon-carbon double bond) | | 1/1 | 1/1 | 1/1.2 | 1/1.4 | 1/0.8 | 1/0.6 | 1/1 |

[Table 4]

| | | Comparative Examples | | | | | |
|---|---|---|---|---|---|---|---|
| | | 1 | 2 | 3 | 4 | 5 | 6 |
| Component (A) | Component (a1) | - | - | - | - | - | - |
| | Loading (parts by mass) | - | - | - | - | - | - |
| | Component (a2) | TMCTS | TMCTS | TMCTS | PHS | PHS | PHS |
| | Loading (parts by mass) | 3.53 | 5.80 | 5.24 | 5.60 | 4.71 | 1.24 |
| Component (B) | | TDM-DVE | TAIC | PB | TDM-DVE | PDM-DVE | TAIC |
| Loading (parts by mass) | | 6.47 | 4.20 | 4.76 | 4,40 | 5.29 | 8.76 |
| Equivalent ratio (hydrosilyl group/carbon-carbon double bond) | | 1/1 | 1/1 | 1/1 | 1/1 | 1/1 | 1/1 |

The components constituting the thermosetting resin compositions, the surface mounting type packages, and the cured products obtained in the above Examples and Comparative Examples were measured for the following various properties.

<Molecular weight of component (A)>

The results of the calculation of the molecular weight of the components (A) are shown in Tables 5 to 8. Note that although the silicon compounds in Comparative Examples are compounds which contain a hydrosilyl group and do not contain an organic group having two or more carbon atoms, they are referred to here as a component (A), for convenience.

<Silicon ratio of component (A)>

The results of the calculation of the silicon ratio of the components (A) are shown in Tables 5 to 8. Note that the silicon ratio is defined as the number of silicon atoms in one molecule multiplied by the atomic weight of the silicon atom, divided by the molecular weight.

<Mass reduction percentage of component (A)> The component (A) was measured for the mass reduction percentage at 200°C. Specifically, a sample of the component (A) was heated from 40°C to 200°C (heating rate: 10°C/min) using a TG/DTA apparatus (trade name: TG/DTA 6000, manufactured by Seiko Instruments, Inc.), and the mass reduction percentage was calculated from the mass at 200°C by the following equation in which the mass at 40°C is defined as 100%. The results are shown in Tables 5 to 8.

$$\text{Mass reduction percentage (\%)} = \{(\text{mass at } 40°\text{C} - \text{mass at } 200°\text{C})/\text{mass at } 40°\text{C}\} \times 100$$

<Evaluation of transparency>

Only the components (A) and (B) were charged into a screw pipe by the ratios shown in the above Tables 1 to 4 to obtain a mixed liquid, which was visually evaluated for the transparency by observing a fluorescent lamp through the liquid. The liquid was rated as "A" when it was transparent and rated as "B" when it was cloudy. The results are shown in Tables 5 to 8. Note that the transparency of a cured product prepared by adding the component (C) was equivalent to the transparency of the liquid containing only the above components (A) and (B). Further, the liquid rated as "B" was not evaluated for the yellowness, interface debonding, and a crack because it was difficult to observe these properties.

<Evaluation of yellowness>

A cured product (1 mm in thickness) for measuring physical properties was evaluated for the yellowness using a yellowness meter (COH 300, manufactured by Nippon Denshoku Industries Co., Ltd.). The results are shown in Tables 5 to 8. Note that the lower the yellowness, the more suitable it is as an optical member.

<Measurement of hardness of cured product>

A cured product (3 mm in thickness) for measuring physical properties was evaluated for the Shore hardness A using a hardness meter (a dual meter, type A). The results are shown in Tables 5 to 8.

<Evaluation of loss of weight> A surface mounting type package immediately after sealed by thermally curing a thermosetting resin composition was visually observed for the presence of the loss of weight by the volume decrease of the sealing resin. The package was rated as "A" when the loss of weight was not observed and rated as "B" when it was observed. The results are shown in Tables 5 to 8.

<Evaluation of interface debonding>

A surface mounting type package immediately after sealed by thermally curing a thermosetting resin composition was visually observed for the presence of the interface debonding between the sealing resin and a polyphthalamide package or a lead frame. The package was rated as "A" when the interface debonding was not observed and rated as "B" when it was observed. The results are shown in Tables 5 to 8.

<Evaluation of crack>

A surface mounting type package immediately after sealed by thermally curing a thermosetting resin composition was visually observed for the presence of a crack in the sealing resin. The package was rated as "A" when the crack was not observed and rated as "B" when it was observed. The results are shown in Tables 5 to 8.

<Evaluation of long term reliability>

A surface mounting type package was subjected to 10 cycles of the cold and hot cycle test in a cold and hot cycle test machine, wherein the one cycle represents 30 minutes at -40°C and 30 minutes at 85°C. The surface mounting type package after the cold and hot cycle test was evaluated for the presence of interface debonding and a crack in the same manner as described above. The results are shown in Tables 5 to 8.

[Table 5]

| | | | Examples | | | | | | |
|---|---|---|---|---|---|---|---|---|---|
| | | | 1 | 2 | 3 | 4 | 5 | 6 | 7 |
| Molecular weight of component (A) | | | 681 | 597 | 625 | 493 | 681 | 681 | 577 |
| Silicon ratio of component (A) | | | 0.17 | 0.19 | 0.18 | 0.23 | 0.17 | 0.17 | 0.20 |
| Mass reduction percentage of component (A) (%) | | | 2.1 | 2.3 | 1.8 | 1.8 | 2.1 | 2.1 | 2.3 |
| Transparency | | | A | A | A | A | A | A | A |
| Yellowness | | | 1.2 | 1.5 | 1.6 | 2.0 | 1.5 | 1.4 | 2.2 |
| Shore hardness | | | 95 | 93 | 94 | 85 | 99 | 99 | 55 |
| Loss of weight after curing | | | A | A | A | A | A | A | A |
| Presence of interface debonding | | Initial | A | A | A | A | A | A | A |
| | | After cold and hot cycle test | A | A | A | A | A | A | A |
| Presence of crack | | Initial | A | A | A | A | A | A | A |
| | | After cold and hot cycle test | A | A | A | A | A | A | A |

[Table 6]

| | | | Examples | | | | | | |
|---|---|---|---|---|---|---|---|---|---|
| | | | 8 | 9 | 10 | 11 | 12 | 13 | 14 |
| Molecular weight of component (A) | | | 1087 | 577 | 681 | 681 | 597 | 597 | 597 |
| Silicon ratio of component (A) | | | 0.31 | 0.20 | 0.17 | 0.17 | 0.19 | 0.19 | 0.19 |
| Mass reduction percentage of component (A) (%) | | | 2.0 | 2.1 | 2.1 | 2.1 | 2.3 | 2.3 | 2.3 |
| Transparency | | | A | A | A | A | A | A | A |
| Yellowness | | | 1.9 | 2.3 | 1.8 | 2.2 | 1.8 | 1.6 | 1.7 |
| Shore hardness | | | 40 | 65 | 90 | 95 | 95 | 93 | 70 |
| Loss of weight after curing | | | A | A | A | A | A | A | A |
| Presence of interface debonding | | Initial | A | A | A | A | A | A | A |
| | | After cold and hot cycle test | A | A | A | A | A | A | A |
| Presence of crack | | Initial | A | A | A | A | A | A | A |
| | | After cold and hot cycle test | A | A | A | A | A | A | A |

[Table 7]

| | | | Examples | | | | | | |
|---|---|---|---|---|---|---|---|---|---|
| | | | 15 | 16 | 17 | 18 | 19 | 20 | 21 |
| Molecular weight of component (A) | | | 741 | 681 | 681 | 681 | 681 | 681 | 681 |
| Silicon ratio of component (A) | | | 0.19 | 0.17 | 0.17 | 0.17 | 0.17 | 0.17 | 0.17 |
| Mass reduction percentage of component (A) (%) | | | 1.9 | 2.1 | 2.1 | 2.1 | 2.1 | 2.1 | 2.1 |
| Transparency | | | A | A | A | A | A | A | A |
| Yellowness | | | 1.6 | 2.2 | 1.3 | 1.5 | 1.3 | 1.3 | 2.2 |
| Shore hardness | | | 89 | 70 | 99 | 95 | 99 | 99 | 72 |
| Loss of weight after curing | | | A | A | A | A | A | A | A |
| Presence of interface debonding | Initial | | A | A | A | A | A | A | A |
| | After cold and hot cycle test | | A | A | A | A | A | A | A |
| Presence of crack | Initial | | A | A | A | A | A | A | A |
| | After cold and hot cycle test | | A | A | A | A | A | A | A |

[Table 8]

| | | | Comparative Examples | | | | | |
|---|---|---|---|---|---|---|---|---|
| | | | 1 | 2 | 3 | 4 | 5 | 6 |
| Molecular weight of component (A) | | | 241 | 241 | 241 | 1957 | 1957 | 1957 |
| Silicon ratio of component (A) | | | 0.47 | 0.47 | 0.47 | 0.46 | 0.46 | 0.46 |
| Mass reduction percentage of component (A) (%) | | | 100 | 100 | 100 | 3 | 3 | 3 |
| Transparency | | | A | B | B | A | B | B |
| Yellowness | | | - | - | - | 2.2 | - | - |
| Shore hardness | | | 80 | - | - | 86 | - | - |
| Loss of weight after curing | | | B | B | B | A | A | A |
| Presence of interface debonding | Initial | | - | - | - | A | - | - |
| | After cold and hot cycle test | | - | - | - | B | - | - |
| Presence of crack | Initial | | - | - | - | A | - | - |
| | After cold and hot cycle test | | - | - | - | B | - | - |

**Industrial Applicability**

As described above, the present invention can provide a thermosetting resin composition which is excellent in transparency, can sufficiently reduce the cure shrinkage at the time of curing, and can sufficiently suppress the occurrence of a crack in a cured product and the occurrence of interface debonding between the cured product and an adherend over a long period of time, and can provide an optical member using the cured product of the thermosetting resin composition.

**Claims**

1. A thermosetting resin composition comprising:

   a compound (A) containing an organic group having two or more carbon atoms and a hydrosilyl group;
   a compound (B) containing a carbon-carbon double bond; and
   a hydrosilylation catalyst (C),

   wherein the composition is liquid at 25°C.

2. The thermosetting resin composition according to claim 1,
   wherein the compound (A) containing an organic group having two or more carbon atoms and a hydrosilyl group
   has a molecular weight of from 300 to 2500.

3. The thermosetting resin composition according to claim 1 or 2,
   wherein the compound (A) containing an organic group having two or more carbon atoms and a hydrosilyl group
   has a silicon ratio of 0.45 or less.

4. The thermosetting resin composition according to any one of claims 1 to 3, wherein the compound (A) containing
   an organic group having two or more carbon atoms and a hydrosilyl group has a mass reduction percentage at
   200°C of 10% or less.

5. The thermosetting resin composition according to any one of claims 1 to 4, wherein the number of hydrosilyl groups
   in one molecule of the compound (A) containing an organic group having two or more carbon atoms and a hydrosilyl
   group is two or more.

6. The thermosetting resin composition according to any one of claims 1 to 5, wherein the compound (A) containing
   an organic group having two or more carbon atoms and a hydrosilyl group is liquid at 25°C.

7. The thermosetting resin composition according to any one of claims 1 to 5, wherein the compound (A) containing
   an organic group having two or more carbon atoms and a hydrosilyl group is a compound obtained by reacting a
   compound (a1) having a carbon-carbon double bond with a compound (a2) having a hydrosilyl group in the presence
   of a hydrosilylation catalyst (a3).

8. The thermosetting resin composition according to claim 7,
   wherein the compound (a1) having a carbon-carbon double bond has an aliphatic group and an alicyclic group.

9. The thermosetting resin composition according to claim 7 or 8,
   wherein the compound (a1) having a carbon-carbon double bond has one carbon-carbon double bond in one
   molecule.

10. The thermosetting resin composition according to any one of claims 1 to 9, wherein the number of the carbon-carbon
    double bonds in one molecule of the compound (B) containing a carbon-carbon double bond is two or more.

11. The thermosetting resin composition according to any one of claims 1 to 10, wherein the compound (B) containing
    a carbon-carbon double bond has a mass reduction percentage at 200°C of 10% or less.

12. The thermosetting resin composition according to any one of claims 1 to 11, wherein the compound (B) containing
    a carbon-carbon double bond is liquid at 25°C.

13. The thermosetting resin composition according to any one of claims 1 to 12, wherein the compound (B) containing
    a carbon-carbon double bond contains at least one group selected from the group consisting of an alicyclic group,
    an aliphatic group, and a heterocyclic group.

14. The thermosetting resin composition according to any one of claims 1 to 13, wherein the equivalent ratio (hydrosilyl
    group/carbon-carbon double bond) of the hydrosilyl group in the compound (A) containing an organic group having
    two or more carbon atoms and a hydrosilyl group to the carbon-carbon double bond in the compound (B) containing
    a carbon-carbon double bond is from 1/1.4 to 1/0.6.

**15.** The thermosetting resin composition according to any one of claims 1 to 14, wherein a mixture of the compound (A) containing an organic group having two or more carbon atoms and a hydrosilyl group and the compound (B) containing a carbon-carbon double bond is transparent to visible light.

**16.** An optical member comprising a cured product obtained by curing a thermosetting resin composition according to any one of claims 1 to 15.

*Fig.1*

<table>
<tr><td colspan="2" align="center"><b>INTERNATIONAL SEARCH REPORT</b></td><td>International application No.<br>PCT/JP2008/057932</td></tr>
</table>

A.  CLASSIFICATION OF SUBJECT MATTER
*C08L83/05*(2006.01)i, *C08L83/07*(2006.01)i, *G02B1/04*(2006.01)i

According to International Patent Classification (IPC) or to both national classification and IPC

B.  FIELDS SEARCHED

Minimum documentation searched (classification system followed by classification symbols)
C08G77/00-77/62, C08K3/00-13/08, C08L1/00-101/14, G02B1/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2006-335718 A  (Kaneka Corp.),<br>14 December, 2006 (14.12.06),<br>Claims; Par. Nos. [0009] to [0118]; examples<br>(Family: none) | 1-16<br>9 |
| X<br>Y | WO 99/24509 A1  (Kaneka Corp.),<br>20 May, 1999 (20.05.99),<br>Claims; pages 10 to 42, 64; examples<br>& EP 1029888 A1 | 1-16<br>9 |
| X<br>Y | JP 2002-241501 A  (Kaneka Corp.),<br>28 August, 2002 (28.08.02),<br>Claims; Par. Nos. [0009] to [0069], [0088] to<br>[0102]; examples<br>(Family: none) | 1-8,10-16<br>9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 July, 2008 (04.07.08) | Date of mailing of the international search report<br>22 July, 2008 (22.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

| | **INTERNATIONAL SEARCH REPORT** | International application No. |
|---|---|---|
| | | PCT/JP2008/057932 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2002-317048 A  (Kaneka Corp.),<br>31 October, 2002 (31.10.02),<br>Claims; Par. Nos. [0018] to [0147]; examples<br>& WO 2002/53648 A1      & US 2004/126504 A1<br>& EP 1369458 A1 | 1-8,10-16<br>9 |
| X<br>Y | JP 8-134220 A  (Kaneka Corp.),<br>28 May, 1996 (28.05.96),<br>Claims; Par. Nos. [0009] to [0036]; examples<br>& EP 709403 A1 | 1-8,10-16<br>9 |
| Y<br>A | JP 8-157604 A  (Kaneka Corp.),<br>18 June, 1996 (18.06.96),<br>Claims; Par. Nos. [0013] to [0020]; examples<br>(Family: none) | 9<br>1-8,10-16 |

Form PCT/ISA/210 (continuation of second sheet) (April 2007)

**EP 2 141 203 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003171439 A
- JP 2004075894 A
- JP 2004292807 A
- JP 2005171021 A